# EUROPEAN PATENT SPECIFICATION

(11) **EP 1 734 312 B1**
(45) Date of publication and mention of the grant of the patent: **27.06.2018**
(21) Application number: 05795494.3
(22) Date of filing: 18.10.2005
(51) Int. Cl.: F24F 3/16, F24F 1/00, B01D 46/00

(54) **FILTER APPARATUS FOR AIR CONDITIONER**
FILTERVORRICHTUNG FÜR KLIMAANLAGE
DISPOSITIF DE FILTRATION POUR CLIMATISEUR

(30) Priority: 19.10.2004 JP 2004304115
(43) Date of publication of application: 20.12.2006
(73) Proprietor: Panasonic Corporation, Kadoma-shi Osaka 571-8501 (JP)
(72) Inventor: EBIHARA, Masaharu, 1-3-7 Shiromi, Chuo-ku, Osaka 540-6319 (JP); SUGIO, Takashi, 1-3-7 Shiromi, Chuo-ku, Osaka 540-6319 (JP); SHIMIZU, Tsutomu, 1-3-7 Shiromi, Chuo-ku, Osaka 540-6319 (JP)
(74) Representative: Grünecker Patent- und Rechtsanwälte PartG mbB
(86) International application number: PCT/JP2005/019095
(87) International publication number: WO 2006/043534

(56) References cited:
- WO-A1-2004/079271
- DE-A1- 19 704 468
- JP-A- 4 309 400
- JP-A- 6 238 116
- JP-A- 9 184 656
- JP-A- 11 014 093
- JP-A- 11 226 331
- JP-A- 2001 099 479
- JP-A- 2002 267 249
- JP-A- 2004 154 753
- JP-A- 2004 156 794
- JP-A- 2004 263 984
- JP-A- 2004 283 703
- JP-A- 2004 283 704
- JP-A- 2004 286 345
- JP-U- 3 006 229
- JP-U- 6 032 926
- JP-U- 6 032 926
- JP-U- 61 197 412

## Description

### TECHNICAL FIELD

The present invention relates to a filtering apparatus for an air conditioner for automatically cleaning an air filter according to the preamble of claim 1. Such a device is known from WO 2004/07 9271 A1.

### BACKGROUND ART

A prior art filtering apparatus for an air conditioner includes an air filter provided on a front face of a heat exchanger for preventing dust from intruding into a main body of the air conditioner. The air filter is detachable from the main body so as to be manually cleaned for removal of dust adhering thereto. This arrangement requires frequent maintenance of the air filter. Further, the air filter is gradually clogged before the maintenance. As a result, the flow rate of air passing through the heat exchanger is reduced. This reduces the air conditioning capability and increases the power consumption.

To save labor for the maintenance of the air filter, an automatic cleaning device for periodically cleaning the air filter to remove the dust from the air filter by a brush has been proposed as disclosed in Japanese Unexamined Patent Publication No. 2001-99479.
A similar concept is thought in JP-A-A-2004-156794, according to which a brush is brought into contact with the air filter to detach dust stuck to the air filter. Thereafter an external device can be used to remove the detached dust from the inside of the air conditioner.

### DISCLOSURE OF THE INVENTION

### Problems to be solved by the invention

However, the prior art using a brush is problematic in that the dust is liable to adhere to the brush and the brush is liable to malfunction due to abrasion or deformation thereof, because the air filter is scrubbed with the brush. Further, dust scraped down and collected by the brush should be removed after a lapse of a certain period, so that the labor for the maintenance is not drastically alleviated. Therefore, the automatic air filter cleaning device is preferably adapted to discharge the dust removed from the air filter to the outside of a room. However, the cleaning device adapted to discharge the dust to the outside requires provision of a pipe dedicated for the discharge of the dust and application of a pressure higher than a predetermined pressure level for the discharge of the dust. It is impossible to provide such dedicated pipe in a house already installed with a concealed pipe. Further, if the pipe for the discharge of the dust is longer than a predetermined length, the discharge pressure is reduced, making it impossible to discharge the dust.

To solve the problems associated with the prior art, the present invention provides a filtering apparatus for an air conditioner, which is adapted to clean an air filter by sucking dust adhering to the air filter by a suction nozzle and is operative selectively to collect the sucked dust in a dust collecting device or to discharge the sucked dust to the outside of a room.

### Means for solving the problems

To solve the aforesaid problems associated with the prior art, the present invention proposes a filtering apparatus as defined in claim 1. Thus, the air filter is cleaned by sucking the dust adhering to the air filter by the suction nozzle, so that the air conditioning capability can be maintained and the power consumption increase can be prevented. Further, the apparatus is operative selectively to collect the sucked dust or to discharge the sucked dust to the outside of a room according to a need.

According to a preferred embodiment of the present invention, the dust collecting device may include a filter portion for collecting the dust. Thus, the dust can be collected up to a predetermined amount in the filter portion.

According to another preferred embodiment of the present invention, the dust collecting device may include a recessed portion detachably provided below the filter portion. Thus, the dust can be collected up to a predetermined amount in the recessed portion, and discharged to the outside by detaching the recessed portion.

According to another preferred embodiment of the present invention, the dust collecting device may include a detachable filter portion, and the filter portion may be attached in the first mode and detached in the second mode. Thus, the collection of the dust or the discharge of the dust can be selected by attaching or detaching the filter portion.

According to another preferred embodiment of the present invention, the dust collecting device may include a centrifugal dust collector for collecting the dust. Thus, the dust can be collected by a centrifugal force with a simple construction.

According to another preferred embodiment of the present invention, the dust collecting device may include a recessed portion detachably provided below the centrifugal dust collector for collecting the dust. Thus, the dust can be collected up to a predetermined amount in the recessed portion, and discharged to the outside by detaching the recessed portion.

### BRIEF DESCRIPTION OF THE DRAWINGS

Fig. 1 is a main body front view illustrating the construction of an air conditioner according to Embodiment 1 of the present invention;
Fig. 2 is a sectional view of Embodiment 1 of the invention taken along a line B-B in Fig. 1;
Fig. 3 is a perspective view illustrating the construction of a filtering apparatus of the air conditioner according to Embodiment 1 of the invention;
Fig. 4 is a sectional view of Embodiment 1 of the invention taken along a line A-A in Fig. 3;
Fig. 5 is a major sectional view illustrating the construction of the filtering apparatus of the air conditioner according to Embodiment 1 of the invention;
Fig. 6(a) is a major sectional view and Figs. 6(b) and 6(c) are major side views illustrating the construction of a filtering apparatus of an air conditioner according to Embodiment 2 of the present invention; and
Figs. 7(a) and 7(b) are major sectional views illustrating the construction of a filtering apparatus of an air conditioner according to Embodiment 3 of the present invention.

### BEST MODE FOR IMPLEMENTING THE INVENTION

Embodiments of the present invention will hereinafter be described with reference to the drawings.

### (Embodiment 1)

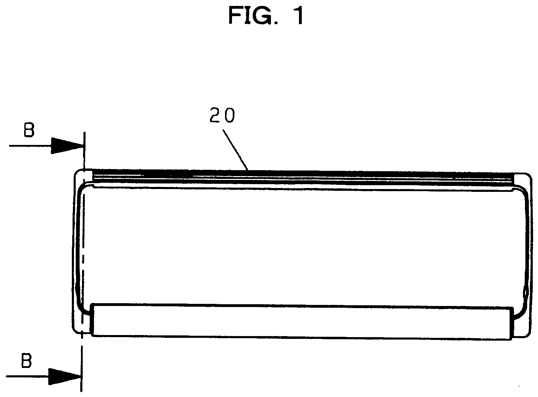

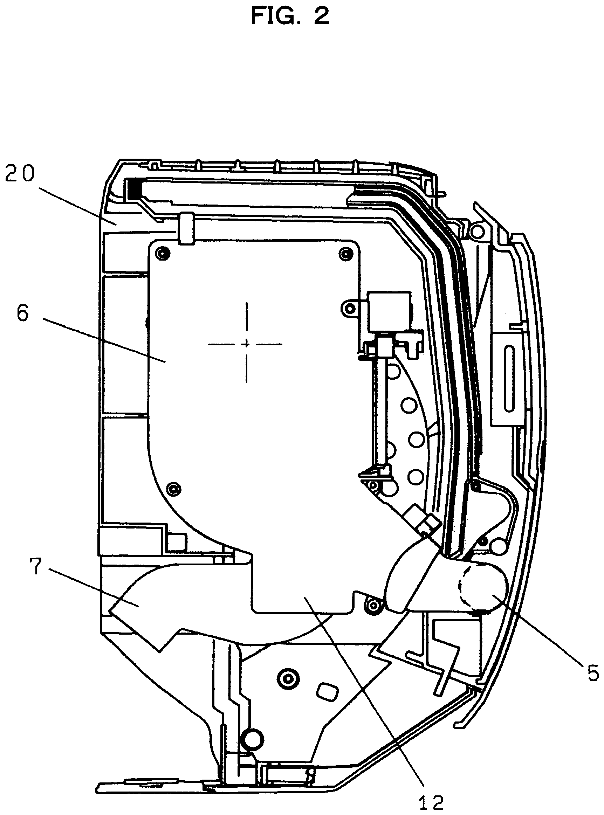

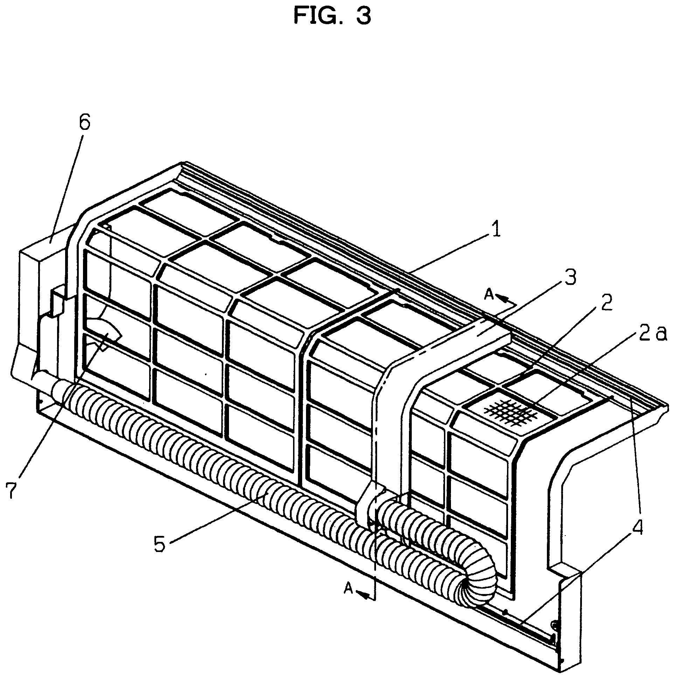

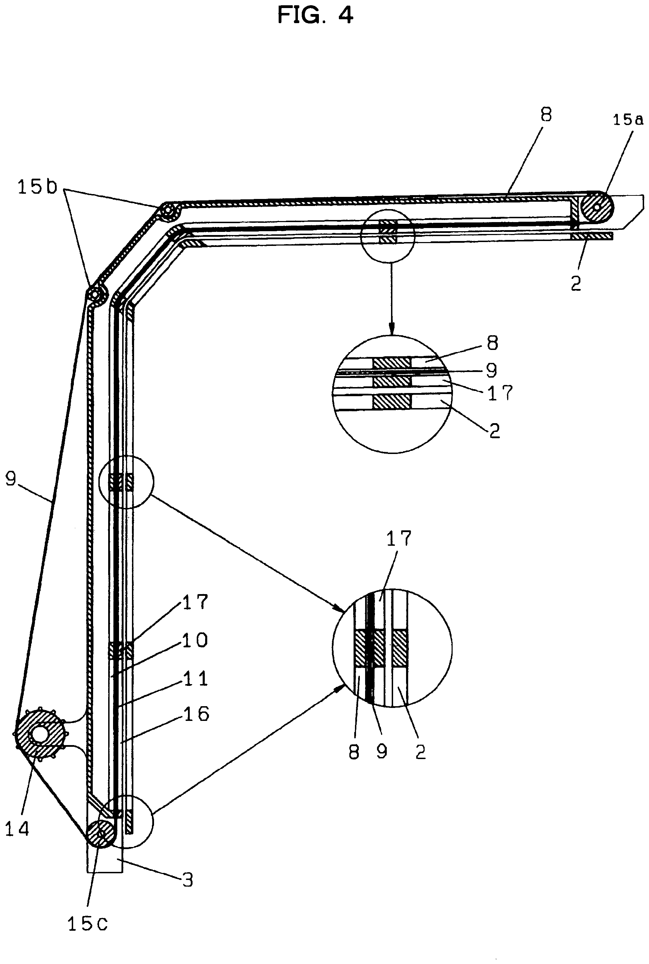

Fig. 1 is a main body front view illustrating the construction of an air conditioner according to Embodiment 1 of the present invention. Fig. 2 is a sectional view taken along a line B-B in Fig. 1, illustrating the construction of the air conditioner according to Embodiment 1 of the invention. Fig. 3 is a perspective view illustrating the construction of a filtering apparatus of the air conditioner according to Embodiment 1 of the invention. Fig. 4 is a sectional view taken along a line A-A in Fig. 3, illustrating the construction of the filtering apparatus of the air conditioner according to Embodiment 1 of the invention. In Fig. 1, a reference character 20 denotes a main body of the air conditioner. In Figs. 2 and 3, an air filter 2 for removing dust from air passing through a heat exchanger is supported and fixed to a filter frame 1, and a suction nozzle 3 is movable along a surface of the air filter 2. The air filter 2 has a net portion 2a which captures the dust. The suction nozzle 3 is smoothly laterally movable with a very small gap defined between the suction nozzle 3 and the air filter 2 by guide rails 4 disposed along upper and lower edges of the filter frame 1. The dust captured on the air filter 2 is sucked by the suction nozzle 3. A suction duct 5 is connected to the suction nozzle 3, and further connected to a suction device 6. The suction duct 5 is flexible so as to permit the movement of the suction nozzle 3. Further, the suction device 6 has an air outlet port 7. A dust collecting device is provided for collecting the dust sucked from the air filter 2 by the suction nozzle 3 and introduced therein through the suction duct 5. Further, a selective means is provided for selectively switching a mode between a first mode which utilizes the dust collecting device and a second mode which does not utilize the dust collecting device.

In Fig. 4, the suction nozzle 3 includes a nozzle 8 defining an air flow path through which the sucked air flows, a film 9 surrounding the nozzle 8, a gear 14 which supports the film 9 and transmits a driving force, and rollers 15a, 15b, 15c which support the film 9 and smoothly drive the film 9. The nozzle 8 has a slit-shaped nozzle opening 10 provided in a face thereof adjacent to the air filter 2 as having a length corresponding to the vertical length of the air filter 2. On the other hand, the film 9 is looped, and wrapped around the nozzle 8 as covering the nozzle opening 10. The film 9 has an opening 16 provided in a surface thereof adjacent to the air filter 2 in association with the nozzle opening 10, and is supported by a film guide 17. The film 9 has a slit-shaped suction port 11, and is attached to the nozzle opening 10 opposed to the suction port 11. Driven holes are equidistantly provided in opposite edge portions of the film 9, and a gear 14 coupled to a stepping motor is engaged with the driven holes to move the film 9 vertically.

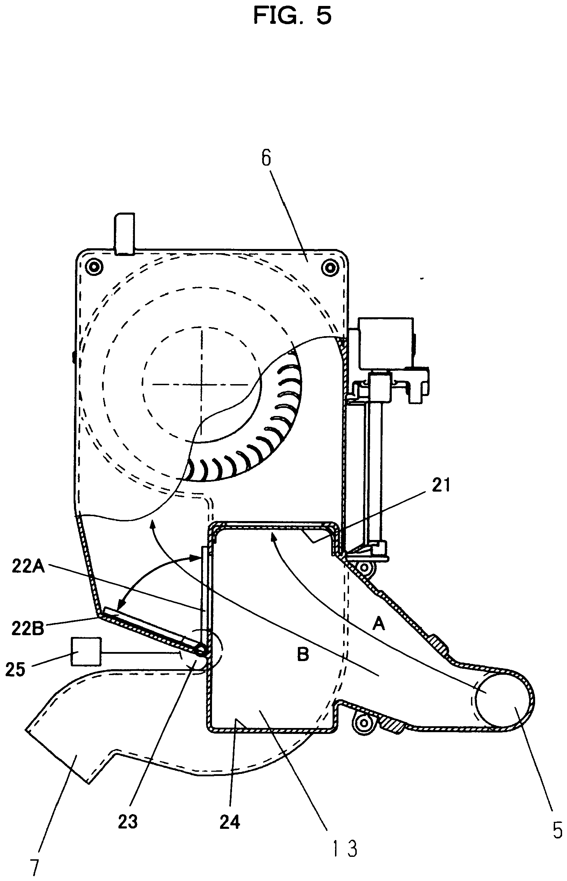

Fig. 5 is a major sectional view illustrating the construction of the filtering apparatus of the air conditioner according to Embodiment 1 of the invention. In Fig. 5, a reference character 13 denotes the dust collecting device which collects the dust sucked by the suction nozzle 3. The dust collecting device is connected to the suction duct 5 at one end thereof, and a filter 21 for collecting the dust is detachably provided downstream of the air flow path. A recessed portion 24 for accumulating the dust is detachably provided below the filter 21. Like the filter 21, an open/close lid 22 is disposed downstream of the air flow path. The open/close lid 22 is driven by a motor 23 to be moved between a first position 22A at which a side face of the dust collecting device 13 is closed and a second position 22B at which the side face of the dust collecting device 13 is opened. A reference character 25 denotes a switch for driving the motor 23. By operating the switch 25, the motor 23 is driven to move the open/close lid 22 to the first position 22A thereby to switch the mode to the first mode which utilizes the dust collecting device 13 for collecting the dust sucked by the suction nozzle 3, and to move the open/close lid 22 to the second position 22B thereby to switch the mode to the second mode which does not utilize the dust collecting device 13. Therefore, the open/close lid 22 serves as the selective means for switching the mode between the first mode and the second mode.

The operation and effects of the air conditioner having the aforesaid construction will hereinafter be described.

When the primary functions of the air conditioner, i.e., cooling, heating and dehumidifying functions and the like, are stopped, the suction device 6 is driven to suck air. The air sucked by the suction device 6 is intensely throttled by the suction port 11 provided in the film 9, so that a higher speed air stream can be generated in the suction port 11 even with a smaller air amount. That is, a stronger suction force can be generated with a smaller output. By this stronger suction force, the dust on the air filter 2 is sucked into the nozzle 8 from the suction port 11 through the nozzle opening 10, and flows through the suction duct 5. While the suction nozzle 3 is moved laterally, the vertical position of the suction port 11 provided in the film 9 is changed. Thus, the entire surface of the air filter 2 can be cleaned by the suction.

The first mode which utilizes the dust collecting device when the dust is not discharged to the outside of a room will be first explained.

By operating the switch 25, the motor 23 is driven to move the open/close lid 22 (selective means) to the first position 22A. The dust sucked by the suction nozzle 3 is guided in an arrow direction A into the dust collecting device 13 from the suction duct 5, and collected in the filter 21 with the open/close lid 22 being closed. The air from which the dust is removed is discharged from the air outlet port 7 through the suction device 6. When the driving of the suction device 6 is stopped, there is no air flow in the arrow direction A, making it possible to remove the dust from the filter 21. Thus, the removal of the dust can be achieved with the filter 21 attached. Further, the dust can be more assuredly removed by detaching the filter 21 from the dust collecting device 13. When the driving of the suction device 6 is stopped, the dust captured on the filter 21 is accumulated in the recessed portion 24 by gravity without the air flow in the arrow direction A. Therefore, the dust can be removed by detaching the recessed portion 24 from the dust collecting device 13.

The second mode for discharging the dust to the outside of the room without the use of the dust collecting device will be secondly explained.

By operating the switch 25, the motor 23 is driven to move the open/close lid 22 (selective means) to the second position 22B. The dust sucked by the suction nozzle 3 is guided in an arrow direction B into the dust collecting device 13 from the suction duct 5 and then to the suction device 6, and discharged from the air outlet port 7 with the open/close lid 22 being opened.

As described in this embodiment, the dust collecting device 13 is disposed upstream of the suction device 6, but may be disposed downstream of the suction device 6 in consideration of the construction of the apparatus. With the dust collecting device 13 disposed upstream of the suction device 6, the dust is prevented from adhering to blades of the suction device 6 in the apparatus adapted to collect the dust by the filter 21.

In this embodiment, as described above, the open/close lid 22 is provided as the selective means for selectively switching the mode between the first mode which utilizes the dust collecting device 13 for collecting the dust sucked by the suction nozzle 3 and the second mode which does not utilize the dust collecting device 13. Thus, the dust captured on the air filter 2 is sucked by the suction nozzle 3 for cleaning the air filter 2, and collected in the dust collecting device 13 or discharged to the outside of the room by selection. This makes it possible to maintain the air conditioning capability and prevent the increase in the power consumption.

### (Embodiment 2)

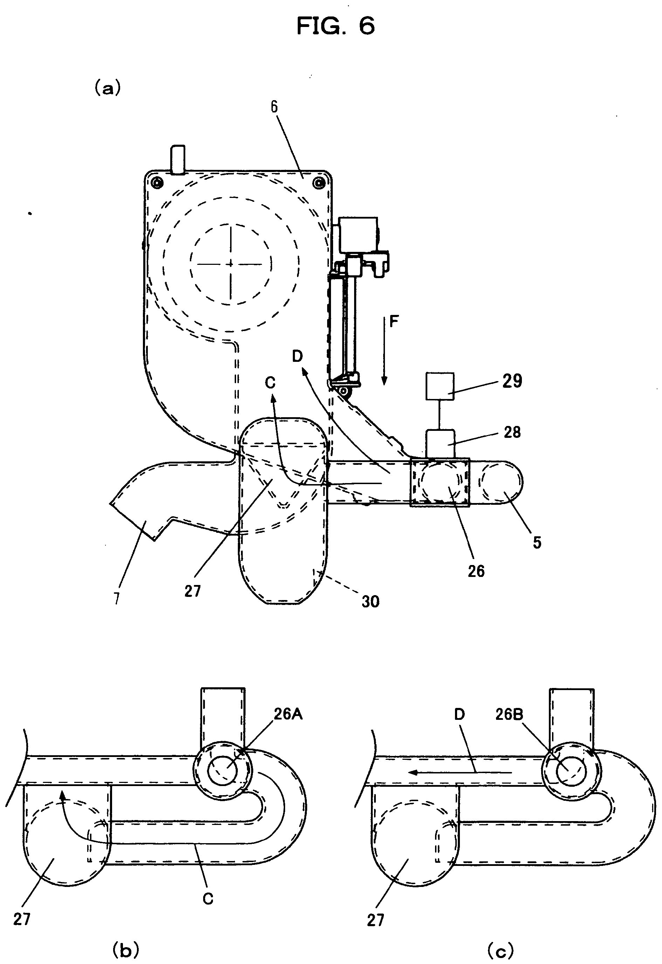

Figs. 6(a) to 6(c) are a major sectional view and major side views illustrating the construction of a filtering apparatus for an air conditioner according to Embodiment 2 of the present invention. Figs. 6(b) and 6(c) are major side views as seen in an arrow direction F in Fig. 6(a). Components equivalent to those of Embodiment 1 will be denoted by the same reference characters, and will not be explained.

In Figs. 6(a) to 6(c), a reference character 26 denotes a selective valve, which serves as the selective means for selectively switching the mode between a first mode which utilizes a dust collecting device 27 for collecting the dust sucked by the suction nozzle 3 and a second mode which does not utilize the dust collecting device 27. The selective valve 26 is connected to the suction duct 5 at one end thereof upstream of the air flow path. The other end of the selective valve 26 downstream of the air flow path is selectively connectable to a first air flow path extending in an arrow direction C to the suction device 6 though the dust collecting device 27 and to a second air flow path extending in an arrow direction D to the suction device 6 as bypassing the dust collecting device 27. The selective valve 26 is switched to a first position 26A to select the first air flow path extending to the suction device 6 through the dust collecting device 27 in the first mode, and switched to a second position 26B to select the second air flow path extending to the suction device 6 as bypassing the dust collecting device 27 in the second mode. The dust collecting device 27 herein includes a centrifugal dust collector which utilizes a cyclone centrifugal force for the dust collection as disclosed in Japanese Unexamined Patent Publication No. 2001-104223. Further, a recessed portion 30 is detachably provided below the dust collecting device 27.

A reference character 29 denotes a switch for driving a motor 28. By operating the switch 29, the motor 28 is driven to switch the selective valve 26 between the first position 26A and the second position 26B.

The operation and effects of the air conditioner having the aforesaid construction will hereinafter be described.

When the primary functions of the air conditioner, i.e., cooling, heating and dehumidifying functions and the like, are stopped, the suction device 6 is driven to suck air. The air sucked by the suction device 6 is intensely throttled by the suction port 11, so that a higher speed air stream can be generated in the suction port 11 even with a smaller air amount. That is, a stronger suction force can be generated with a smaller output. By this stronger suction force, the dust on the air filter 2 is sucked into the nozzle 8 from the suction port 11 through the nozzle opening 10, and flows through the suction duct 5. While the suction nozzle 3 is moved laterally, the suction port 11 provided in the film 9 is moved. Thus, the entire surface of the air filter 2 can be cleaned by the suction.

The first mode which utilizes the dust collecting device when the dust is not discharged to the outside of the room will be first explained.

By operating the switch 29, the motor 28 is driven to move the selective valve 26 (selective means) to the first position 26A. The dust sucked by the suction nozzle 3 is guided in the arrow direction C into the dust collecting device 27 (centrifugal dust collector) from the suction duct 5 through the selective valve 26, and collected in the recessed portion 30 provided below the dust collecting device 27. The air from which the dust is removed is discharged from the air outlet port 7 through the suction device 6. When the driving of the suction device 6 is stopped, there is no air flow in the arrow direction C. Therefore, the dust collected in the recessed portion 30 can be removed by detaching the recessed portion 30 from the dust collecting device 27. Since the dust is collected in the recessed portion 30 provided below the dust collecting device 27, the dust can be accumulated up to a predetermined amount greater than the amount of the dust to be accumulated on the filter described in Embodiment 1. Further, the air flow to the suction device 6 is not hindered. In other words, it is possible to accumulate the dust while preventing the deterioration of the dust collecting capability.

The second mode for discharging the dust to the outside of the room without the use of the dust collecting device will be secondly explained.

By operating the switch 29, the motor 28 is driven to move the selective valve 26 (selective means) to the second position 26B. The dust sucked by the suction nozzle 3 is guided in the arrow direction D into the suction device 6 from the suction duct 5 through the selective valve 26 as bypassing the dust collecting device 27, and discharged from the air outlet port 7.

As described in this embodiment, the dust collecting device 27 is disposed upstream of the suction device 6, but may be disposed downstream of the suction device 6 in consideration of the construction of the apparatus. With the dust collecting device 27 disposed upstream of the suction device 6, the dust is prevented from adhering to blades of the dust suction device 6 in the apparatus adapted to collect the dust by the centrifugal dust collector.

In this embodiment, as described above, the selective valve 26 is provided as the selective means for selectively switching the mode between the first mode which utilizes the dust collecting device 27 for collecting the dust sucked by the suction nozzle 3 and the second mode which does not utilize the dust collecting device 27. Thus, the dust captured on the air filter 2 is sucked by the suction nozzle 3 for cleaning the air filter 2, and collected in the dust collecting device 27 or discharged to the outside of the room by selection. This makes it possible to maintain the air conditioning capability and prevent the increase in the power consumption.

### (Embodiment 3)

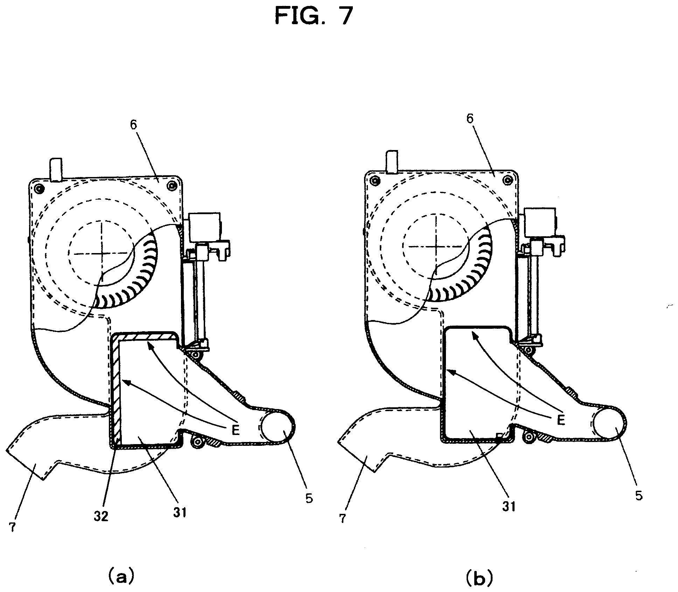

Figs. 7(a) and 7(b) are major sectional views illustrating the construction of a filtering apparatus for an air conditioner according to Embodiment 3 of the present invention. Components equivalent to those of Embodiments 1 and 2 will be denoted by the same reference characters, and will not be explained.

In Figs. 7(a) and 7(b), a reference character 31 denotes a dust collecting device, which includes a detachable filter 32 for collecting the dust. The filter 32 serves as the selective means for selectively switching the mode between a first mode which utilizes the dust collecting device 31 for collecting the dust sucked by the suction nozzle 3 with the filter 32 attached (Fig. 7(a)) and a second mode which virtually does not utilize the dust collecting device 31 because the filter 32 is detached (Fig. 7(b)).

The dust collecting device 31 is connected to the suction duct 5 at one end thereof upstream of the air flow path, and connected to the suction device 6 at the other end thereof downstream of the air flow path. The air flow path can be switched between a first air flow path which extends to the suction device 6 through the dust collecting device 31 provided with the filter 32 in the first mode and a second air flow path which extends to the suction device 6 not through the dust collecting device 31 because the filter 32 is detached from the dust collecting device 31 in the second mode.

The operation and effects of the air conditioner having the aforesaid construction will hereinafter be described.

When the primary functions of the air conditioner, i.e., cooling, heating and dehumidifying functions and the like, are stopped, the suction device 6 is driven to suck air. The air sucked by the suction device 6 is intensely throttled by the suction port 11, so that a higher speed air stream can be generated in the suction port 11 even with a smaller air amount. That is, a stronger suction force can be generated with a smaller output. By this stronger suction force, the dust on the air filter 2 is sucked into the nozzle 8 from the suction port 11 through the nozzle opening 10, and flows through the suction duct 5. While the suction nozzle 3 is moved laterally, the suction port 11 provided in the film 9 is moved. Thus, the entire surface of the air filter 2 can be cleaned by the suction.

The first mode which utilizes the dust collecting device when the dust is not discharged to the outside of the room will be first explained.

The filter 32 that is a selective means is attached to the dust collecting device 31 as shown in Fig. 7(a). The dust sucked by the suction nozzle 3 is introduced into the dust collecting device 31 from the suction duct 5, and collected by the filter 32. The air from which the dust is removed is discharged from the air outlet port 7 through the suction device 6. When the driving of the suction device 6 is stopped, there is no air flow in an arrow direction E. Therefore, the dust collected by the filter 32 can be removed by detaching the filter 32 from the dust collecting device 31. That is, the collection of the dust can be achieved simply by providing the filter 32 in the midst of the air flow path through which the air-borne dust passes.

The second mode for discharging the dust to the outside of the room without the use of the dust collecting device will be secondly explained.

The filter 32 that is a selective means is detached from the dust collecting device 31 as shown in Fig. 7(b). The dust sucked by the suction nozzle 3 is guided in the arrow direction E from the suction duct 5 without the use of the dust collecting device 31 with the filter 32 detached, and discharged from the air outlet port 7.

As described in this embodiment, the dust collecting device 31 is disposed upstream of the suction device 6, but may be disposed downstream of the suction device 6 in consideration of the construction of the apparatus. With the dust collecting device 31 disposed upstream of the suction device 6, the dust is prevented from adhering to blades of the suction device 6 in the apparatus adapted to collect the dust by the filter 32.

In this embodiment, as described above, the filter 32 is detachably provided as the selective means for selectively switching the mode between the first mode which utilizes the dust collecting device 31 for collecting the dust sucked by the suction nozzle 3 and the second mode which does not utilize the dust collecting device 31. Thus, the dust captured on the air filter 2 is sucked by the suction nozzle 3 for cleaning the air filter 2, and collected in the dust collecting device 31 or discharged to the outside of the room by selection. This makes it possible to maintain the air conditioning capability and prevent the increase in the power consumption.

### INDUSTRIAL APPLICABILITY

The inventive filtering apparatus is automatically and assuredly collect the dust adhering to the air filter and, therefore, is applicable to other products utilizing filters.

## Claims

1. A filtering apparatus for an air conditioner comprising:
an air filter (2) for removing dust from air passing through a heat exchanger;
a suction nozzle (3) for sucking dust adhering to the air filter;
a suction device (6) connected to the suction nozzle (3) and having an air outlet port (7) to discharge there from air sucked by the suction nozzle (3); and
a dust collecting device (13, 27, 31) disposed at least upstream or downstream of the suction device (6) for collecting the dust sucked by the suction nozzle (3); **characterized in that** the sittering apparatus further comprises
selective means (22, 26) for selectively switching a mode between a first mode which utilizes the dust collecting device (13, 27, 31) so as to collect dust and discharge from the air outlet port (7) the air sucked by the saction nozzle (3) and removed from dust and a second mode which does not utilize the dust collecting device (13, 27, 31) so as to discharge from the air outlet port (7) the dust sucked by the saction nozzle (3).

2. The filtering apparatus as set forth in claim 1, wherein the dust collecting device (13, 31) includes a filter portion (21, 32) for collecting the dust.

3. The filtering apparatus as set forth in claim 2, wherein the dust collecting device (13) includes a recessed portion (24) detachably provided below the filter portion (21).

4. The filtering apparatus as set forth in claim 1, wherein the dust collecting device (13, 31) includes a detachable filter portion (21, 32), the filter portion (21, 32) being attached in the first mode and detached in the second mode.

5. The filtering apparatus as set forth in claim 1, wherein the dust collecting device (27) includes a centrifugal dust collector for collecting the dust.

6. The filtering apparatus as set forth in claim 5, wherein the dust collecting device (27) includes a recessed portion (30) detachably provided below the centrifugal dust collector for collecting the dust.

## Patentansprüche

1. Filtergerät für eine Klimaanlage umfassend:
einen Luftfilter (2) zum Entfernen von Staub aus Luft, die einen Wärmetauscher durchläuft;
eine Ansaugdüse (3) zum Ansaugen von Staub, der an dem Luftfilter haftet;
eine Ansaugvorrichtung (6), die mit der Ansaugdüse (3) verbunden ist und einen Luftauslassanschluss (7) hat, um daraus Luft auszugeben, die von der Ansaugdüse (3) angesaugt wird; und
eine Staubsammelvorrichtung (13, 27, 31), die wenigstens stromaufwärts oder Stromabwärts von der Ansaugvorrichtung (6) angeordnet ist, um den Staub zu sammeln, der von der Ansaugdüse (3) angesaugt wird,
**dadurch gekennzeichnet, dass**
das Filtergerät weiterhin umfasst:
eine Auswahleinheit (22, 26) zum selektiven Umschalten einer Betriebsart zwischen einer ersten Betriebsart, die die Staubsammelvorrichtung (13, 27, 31) verwendet, um so Staub zu sammeln und aus dem Luftauslassanschluss (7) die Luft auszugeben, die von der Ansaugdüse (3) angesaugt und aus der der Staub entfernt wurde, und einer zweiten Betriebsart, die nicht die Staubsammelvorrichtung (13, 27, 31) verwendet, um so aus dem Luftauslassanschluss (7) den Staub auszugeben, der von der Ansaugdüse (3) angesaugt wird.

2. Filtergerät nach Anspruch 1, bei dem die Staubsammelvorrichtung (13, 31) einen Filterabschnitt (21, 32) zum Sammeln des Staubs umfasst.

3. Filtergerät nach Anspruch 2, bei dem die Staubsammelvorrichtung (13) einen ausgenommenen Abschnitt (24) umfasst, der lösbar unter dem Filterabschnitt (21) vorgesehen ist.

4. Filtergerät nach Anspruch 1, bei dem die Staubsammelvorrichtung (13, 31) einen lösbaren Filterabschnitt (21, 32) umfasst, wobei der Filterabschnitt (21, 32) in der ersten Betriebsart angebracht und in der zweiten Betriebsart gelöst ist.

5. Filtergerät nach Anspruch 1, bei dem die Staubsammelvorrichtung (27) einen Zentrifugalstaubsammler zum Sammeln des Staubs umfasst.

6. Filtergerät nach Anspruch 5, bei dem die Staubsammelvorrichtung (27) einen ausgenommenen Abschnitt (30) umfasst, der lösbar unter dem Zentrifugalstaubsammler vorgesehen ist, um den Staub zu sammeln.

## Revendications

1. Appareil de filtration pour climatiseur, comprenant :
un filtre à air (2) permettant d'éliminer la poussière de l'air passant à travers un échangeur de chaleur ;
une buse d'aspiration (3) permettant d'aspirer la poussière qui adhère au filtre à air ;
un dispositif d'aspiration (6) relié à la buse d'aspiration (3) et pourvu d'un orifice de sortie d'air (7) pour évacuer l'air aspiré par la buse d'aspiration (3) ; et
un dispositif de collecte de poussière (13, 27, 31) disposé au moins en amont ou en aval du dispositif d'aspiration (6) pour collecter la poussière aspirée par la buse d'aspiration (3) ;
**caractérisé en ce que** l'appareil de filtration comprend, en outre,
un moyen sélectif (22, 26) permettant une commutation sélective de mode entre un premier mode, qui utilise le dispositif de collecte de poussière (13, 27, 31) de manière à collecter la poussière et à évacuer par l'orifice de sortie d'air (7) l'air aspiré par la buse d'aspiration (3) et débarrassé de la poussière, et un second mode, qui n'utilise pas le dispositif de collecte de poussière (13, 27, 31) de manière à évacuer par l'orifice de sortie d'air (7) la poussière aspirée par la buse d'aspiration (3).

2. Appareil de filtration selon la revendication 1, dans lequel le dispositif de collecte de poussière (13, 31) inclut une partie formant filtre (21, 32) destinée à collecter la poussière.

3. Appareil de filtration selon la revendication 2, dans lequel le dispositif de collecte de poussière (13) inclut une partie en creux (24) placée de manière amovible sous la partie formant filtre (21).

4. Appareil de filtration selon la revendication 1, dans lequel le dispositif de collecte de poussière (13, 31) inclut une partie formant filtre (21, 32) amovible, la partie formant filtre (21, 32) étant attachée dans le premier mode et détachée dans le second mode.

5. Appareil de filtration selon la revendication 1, dans lequel le dispositif de collecte de poussière (27) inclut un collecteur de poussière centrifuge destiné à collecter la poussière.

6. Appareil de filtration selon la revendication 5, dans lequel le dispositif de collecte de poussière (27) inclut une partie en creux (30) placée de manière amovible sous le collecteur de poussière centrifuge pour collecter la poussière.
